# FASCICULE DE BREVET EUROPEEN

(11) **EP 4 291 490 B1**
(45) Date de publication et mention de la délivrance du brevet: **30.10.2024**
(21) Numéro de dépôt: 22705080.4
(22) Date de dépôt: 01.02.2022
(51) Int. Cl.: B64D 35/08, B64D 35/04, B64D 27/24

(54) **ENSEMBLE PROPULSIF D'AERONEF AMELIORE**
VERBESSERTE FLUGZEUGANTRIEBSANORDNUNG
IMPROVED AIRCRAFT PROPULSION ASSEMBLY

(30) Priorité: 10.02.2021 FR 2101261
(43) Date de publication de la demande: 20.12.2023
(73) Titulaire: Safran Transmission Systems, 92700 Colombes (FR)
(72) Inventeur: RAUCOULES, Clément, 77550 MOISSY-CRAMAYEL (FR); MORELLI, Boris, Pierre, Marcel, 77550 MOISSY-CRAMAYEL (FR); PELTIER, Jordane, Emile, André, 77550 MOISSY-CRAMAYEL (FR)
(74) Mandataire: Cabinet Beau de Loménie
(86) Numéro de dépôt international: PCT/FR2022/050187
(87) Numéro de publication internationale: WO 2022/171945

(56) Documents cités:
- WO-A2-02/053403
- US-A1- 2013 231 208
- US-A1- 2019 344 877
- US-B2- 10 343 787

## Description

### Domaine Technique

La présente invention se rapporte au domaine général des propulseurs à moteurs électriques destinés à être disposés dans des voilures d'engins aéronautiques tels que des avions à propulsion électrique, mais pas uniquement. L'invention concerne en particulier un ensemble propulsif pour aéronef comprenant de tels moteurs électriques, et un aéronef comprenant cet ensemble propulsif.

### Technique antérieure

Des systèmes de propulsion (dits « e-Propeller »), comprenant un moteur électrique entrainant une hélice en rotation, notamment par l'intermédiaire d'une transmission de puissance mécanique, sont utilisés de manière connue dans le domaine de l'aéronautique. En particulier, ces systèmes de propulsion « e-Propeller » peuvent être utilisés sur des drones, des taxis volants, des petits avions électriques ou hybride thermique/électrique. Dans ces deux derniers cas de figure, les systèmes « e-Propeller » sont généralement répartis le long des ailes ou en bout d'aile. L'énergie électrique provient de batterie (tout électrique) ou via un générateur entrainé par un moteur thermique (hybride). US 2013/231208 A1, US 10 343 787 B2 et US 2019/344877 A1 divulguent des exemples de systèmes de propulsion comprenant des moteurs électriques entrainant une hélice en rotation.

L'emplacement de ces systèmes de propulsion « ePropellers » n'est pas conventionnel et soulèvent de nouvelles problématiques d'intégration. Par ailleurs, l'augmentation des besoins en puissances et les besoins de redondance tendent à multiplier le nombre de moteurs électriques nécessaires. Or, les moteurs de ces différents systèmes de propulsion existant présentent généralement des diamètres ainsi que des longueurs importantes, rendant leur intégration complexe. En outre, certaines architectures de moteur, nécessitant notamment la présence de réducteurs, engendrent une augmentation considérable de l'encombrement, en particulier dans le cas de l'utilisation de plusieurs moteurs ou de plusieurs hélices. Cet encombrement pénalise fortement les performances aérodynamiques de l'aéronef. Ces différentes contraintes rendent complexe l'intégration de ces systèmes dans une voilure d'aéronef.

Il existe donc un besoin pour un système propulsif pour aéronef, comprenant des moteurs électriques, permettant de surmonter au moins en partie les inconvénients précités.

### Exposé de l'invention

Le présent exposé concerne un aéronef selon la revendication 1. Celui-ci comprend un ensemble propulsif ayant:
- au moins deux moteurs électriques configurés pour être disposé dans une voilure de l'aéronef et comprenant chacun un rotor ayant un arbre moteur mobile autour d'un axe moteur,
- au moins une hélice portée par un arbre d'hélice mobile autour d'un axe d'hélice et couplé mécaniquement à l'arbre moteur des au moins deux moteurs électriques, l'axe d'hélice étant perpendiculaire à l'axe moteur des au moins deux moteurs électriques.

On comprend que l'arbre d'hélice est couplé à l'un et l'autre des moteurs électriques par l'intermédiaire de l'arbre moteur de chacun d'eux. L'hélice est donc entrainée en rotation par chacun des moteurs. Les axes des moteurs sont de préférence tous deux centrés sur le même axe moteur et sont tous les deux perpendiculaires à l'axe d'hélice.

L'architecture définie dans le présent exposé permet l'intégration de l'ensemble propulsif au sein d'une voilure de l'aéronef, en offrant la possibilité d'orienter les moteurs électriques dans la direction de la voilure, tout en conservant l'axe d'hélice perpendiculaire à la voilure. Cette architecture permet également d'utiliser plusieurs moteurs électriques et d'entrainer une ou deux hélices, potentiellement contrarotatives. En particulier, compte tenu du fait que les moteurs sont implantés perpendiculairement à l'axe d'hélice, l'arbre d'hélice peut-être traversant et disposer d'une seconde hélice.

Cette architecture permet également de réduire la trainée. En effet, le profil d'une aile est défini pour obtenir les meilleures performances aérodynamiques. Il comprend un bord d'attaque large et arrondi et évolue progressivement vers un bord de fuite fin et élancé. Selon l'architecture du présent exposé, les moteurs électriques peuvent être placés dans la zone du bord d'attaque (dans la direction principale de la voilure) qui présente naturellement le plus grand volume disponible. En particulier, les moteurs électriques selon le présent exposé peuvent être entièrement disposés dans une région de la voilure plus proche du bord d'attaque que du bord de fuite. A l'inverse, dans une architecture selon l'art antérieur, dans laquelle les axes des moteurs sont disposés parallèlement à l'axe d'hélice, l'aile devrait nécessairement être plus épaisse localement, entre le bord d'attaque et le bord de fuite sur toute la longueur du moteur pour pouvoir loger ce dernier, augmentant ainsi la trainée.

Ainsi, l'ensemble propulsif électrique ou hybride thermique/électrique selon le présent exposé est particulièrement adapté aux aéronefs à propulsion électrique tel que des drones, des taxis volants, des hélicoptères électriques, ou des avions électriques ou hybrides thermique/électriques.

L'arbre moteur de chacun des moteurs électriques porte un pignon conique de moteur, et l'arbre d'hélice porte au moins un pignon conique d'hélice s'engrenant avec le pignon conique de moteur porté par l'arbre moteur de chacun des moteurs électriques.

Lorsque que l'ensemble propulsif comprend par exemple deux moteurs, chaque moteur électrique dispose d'un pignon conique porté par son arbre moteur et accouplé à son rotor. Le pignon conique d'hélice engrène avec les deux pignons coniques de moteur assurant ainsi la transmission de puissance mécanique des moteurs électriques vers l'hélice. Selon cette architecture dans laquelle l'axe d'hélice est perpendiculaire à l'axe moteur, les pignons coniques permettent ainsi de réaliser le renvoi d'angle. Cette configuration permet également de choisir le sens de rotation de l'hélice en fonction du positionnement des pignons.

Dans certains modes de réalisation, une partie amincie du pignon conique d'hélice est orientée dans une direction opposée à hélice.

Dans certains modes de réalisation, une partie amincie du pignon conique d'hélice est orientée dans la direction de l'hélice.

On comprend dans le présent exposé que les pignons coniques présentent une forme conique, ou tronconique, et sont axisymétrique autour de l'axe le long duquel s'étend l'arbre qui les porte. Compte tenu de cette forme conique ou tronconique, une extrémité axiale de ces pignons présente un diamètre plus faible (partie amincie) que l'extrémité axiale opposée.

Ainsi, selon ce mode de réalisation, la partie amincie du pignon conique d'hélice peut être orientée dans une direction opposée à hélice. Autrement dit, la section du pignon conique d'hélice s'amincit à mesure que l'on s'éloigne de l'hélice, le long de l'axe d'hélice. Selon ce cas de figure, le pignon d'hélice engrène avec un premier côté du pignon conique de moteur de chaque moteur, de manière à ce que l'hélice tourne dans un premier sens de rotation.

A l'inverse, la partie amincie du pignon conique d'hélice peut être orientée dans la direction de l'hélice. Autrement dit, la section du pignon conique d'hélice s'amincit à mesure que l'on se rapproche de l'hélice, le long de l'axe d'hélice. Selon ce cas de figure, le pignon d'hélice est disposé à une position différente sur l'arbre d'hélice, le long de l'axe d'hélice, de manière à engrener avec un deuxième côté, opposé au premier côté, du pignon conique de moteur de chaque moteur, de manière à ce que l'hélice tourne dans un deuxième sens de rotation, opposé au premier sens de rotation.

Par conséquent, selon cette architecture dans laquelle l'axe d'hélice est perpendiculaire à l'axe moteur, le sens de rotation de l'hélice peut être choisit indépendamment du sens de rotation des moteurs électriques et sans augmenter le nombre de pièces, en choisissant l'orientation du pignon conique de l'arbre d'hélice.

Dans certains modes de réalisation, l'arbre d'hélice comprend un réducteur mécanique disposé entre le pignon conique d'hélice et l'hélice, et configuré pour réduire la vitesse de rotation de l'hélice par rapport à la vitesse de rotation des moteurs électriques.

Le fait de rajouter un réducteur mécanique supplémentaire permet d'atteindre un rapport de réduction souhaité, dans le cas où le rapport de réduction souhaité n'est pas atteignable avec un seul engrènement. Ce réducteur mécanique peut prendre la forme d'un train épicycloïdal.

Dans certains modes de réalisation, l'arbre d'hélice comprend une première portion couplée mécaniquement à l'arbre moteur des moteurs électriques, et une deuxième portion portant l'hélice, les première et deuxième portions étant décalées radialement l'une par rapport à l'autre, et s'engrenant l'une avec l'autre par l'intermédiaire d'un train d'engrenages.

Par « décalées radialement », on comprend que la première et la deuxième portion de l'arbre d'hélice sont décalées l'une par rapport à l'autre dans une direction perpendiculaire à l'axe d'hélice, et s'engrènent l'une avec l'autre, de préférence par un train d'engrenages droits. Ainsi, l'axe de la première portion et l'axe de la deuxième portion sont parallèles entre eux, et tous deux perpendiculaires à l'axe moteur. Cette configuration permet de décaler l'axe d'hélice par rapport au plan dans lequel se trouvent les moteurs électriques. Lorsque l'ensemble propulsif est disposé dans une voilure d'aéronef, le fait de décaler l'axe d'hélice par rapport au plan de la voilure peut permettre d'améliorer les performances aérodynamiques de l'engin.

Dans certains modes de réalisation, les au moins deux moteurs électriques sont disposés de part et d'autre de l'arbre d'hélice de manière à former une première paire de moteurs électriques, l'axe moteur étant un premier axe moteur, l'ensemble propulsif comprenant au moins une deuxième paire de moteurs électriques comprenant chacun un rotor ayant un arbre moteur mobile autour d'un deuxième axe moteur parallèle au premier axe moteur.

Par « disposés de part et d'autre », on comprend qu'un premier moteur de la paire de moteurs est disposé d'un premier côté de l'arbre d'hélice, et qu'un deuxième moteur de la paire de moteurs est disposé d'un deuxième côté de l'arbre d'hélice, opposé au premier côté. En d'autres termes, les deux moteurs de la paire de moteurs sont disposés en vis-à-vis l'un de l'autre, de chaque côté de l'arbre d'hélice. En outre, les rotors des moteurs de chaque paire de moteurs sont centrés autour d'un même axe. Ainsi, les rotors de la première paire de moteurs tournent autour du premier axe moteur, et les rotors de la deuxième paire de moteurs tournent autour du deuxième axe moteur. Le deuxième axe moteur étant décalé axialement par rapport au premier axe moteur, le long de l'axe d'hélice.

Ainsi, l'arbre d'hélice est couplé mécaniquement avec chaque moteur de chaque paire de moteurs. Cette architecture dans laquelle l'axe d'hélice est perpendiculaire à l'axe moteur ou les axes moteurs est donc compatible avec des motorisations multi-moteurs, tout en conservant un encombrement limité, ce qui est très avantageux lorsque que le besoin en puissance élevé nécessite la multiplication du nombre de moteurs électriques.

Dans certains modes de réalisation, l'arbre d'hélice comprend autant de pignons coniques d'hélice que de paires de moteurs électriques.

Selon ce mode de réalisation, l'arbre d'hélice porte une pluralité de pignons coniques d'hélice répartis axialement le long de l'arbre d'hélice, de manière à ce que chaque pignon conique d'hélice s'engrène avec les pignons coniques de moteur d'une paire de moteurs. La puissance mécanique des moteurs électriques de chaque paire de moteurs peut ainsi être transmise efficacement vers l'hélice, tout en limitant l'encombrement total.

Dans certains modes de réalisation, l'ensemble propulsif comprend une unique hélice et un moteur électrique supplémentaire, l'arbre moteur du rotor du moteur électrique supplémentaire étant parallèle à l'arbre d'hélice et étant couplé à une extrémité de l'arbre d'hélice opposée à l'hélice.

L'arbre d'hélice s'étend axialement entre une première et une deuxième extrémité. Selon ce mode de réalisation, l'unique hélice est disposée à la première extrémité de l'arbre, et le moteur électrique supplémentaire est disposé et couplé à la deuxième extrémité de l'arbre d'hélice. En outre, l'axe moteur du rotor de ce moteur supplémentaire est parallèle, de préférence confondu avec l'axe d'hélice. Il est ainsi possible d'ajouter un moteur supplémentaire, en plus de la ou des paires de moteurs disposés de part et d'autre de l'arbre d'hélice, permettant d'obtenir un nombre impair de moteurs électriques. Cette architecture en étoile permet d'augmenter davantage le nombre de moteurs électriques, et donc d'augmenter la puissance totale de l'ensemble propulsif, tout en limitant l'encombrement total.

Dans certains modes de réalisation, la au moins une hélice est une première hélice, l'ensemble comprenant une deuxième hélice disposée à une extrémité opposée de l'arbre d'hélice par rapport à la première hélice, et orientée dans une direction opposée à la première hélice.

Selon ce mode de réalisation, la deuxième hélice est disposée sur la deuxième extrémité axiale de l'arbre d'hélice, et est orientée dans une direction opposée à la première hélice. Dans ce cas de figure, la première et la deuxième hélice sont portées par le même arbre d'hélice, et sont couplées aux moteurs électriques par l'intermédiaire du pignon conique d'hélice, ou des pignons coniques d'hélice lorsque l'ensemble comprend plusieurs paires de moteurs. Ainsi, compte tenu de cette architecture dans laquelle l'axe d'hélice est perpendiculaire à l'axe moteur, il est possible de disposer un arbre d'hélice traversant, comportant une hélice à chacune de ses extrémités, ces hélices étant co-rotatives.

Dans certains modes de réalisation, la au moins une hélice est une première hélice et l'arbre d'hélice est un premier arbre d'hélice, l'ensemble propulsif comprenant une deuxième hélice orientée dans une direction opposée à la première hélice et portée par un deuxième arbre d'hélice distinct du premier arbre d'hélice, le deuxième arbre d'hélice étant mobile autour de l'axe d'hélice dans un sens de rotation opposé à la première hélice.

Selon ce mode de réalisation, la première et la deuxième hélice sont portées par deux arbres d'hélice distincts, et sont couplées aux moteurs électriques par l'intermédiaire d'un premier et d'un deuxième pignon conique d'hélice portés respectivement par chacun des arbres d'hélice. Dans ce cas de figure, chacun du premier et du deuxième pignon conique engrène avec des côtés opposés des pignons coniques de moteur. Ainsi, compte tenu de cette architecture dans laquelle l'axe d'hélice est perpendiculaire à l'axe moteur, il est possible de disposer deux hélices de part et d'autre de l'ensemble, ces hélices étant contra-rotatives.

Dans certains modes de réalisation, l'ensemble propulsif comprend au moins un moyen de découplage configuré pour découpler les moteurs.

En particulier, le moyen de découplage permet de découpler les moteurs d'une paire de moteurs, lorsque l'un d'eux est défaillant. Le moyen de découplage peut être réalisé en ajoutant une roue libre entre chaque moteur électrique et son pignon conique, par exemple.

L'aéronef est de préférence un aéronef à propulsion électrique tel qu'un drone, un taxi volant, un hélicoptère électrique, ou un avion électrique ou hybride thermique/électrique. Lorsque la voilure est une aile d'avion par exemple, l'axe principal correspond à la direction selon laquelle s'étend l'aile, depuis son emplanture jusqu'à son extrémité. Ainsi, selon cette architecture, l'axe moteur des moteurs est parallèle à cet axe principal, alors que l'axe d'hélice est perpendiculaire à l'axe principal. Cette architecture permet ainsi d'optimiser l'intégration de l'ensemble propulsif au sein de la voilure de l'aéronef en orientant les moteurs électriques dans le sens de la voilure, et en conservant l'axe d'hélice perpendiculaire à la voilure.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 est une vue schématique en perspective d'une portion d'aéronef selon un premier mode de réalisation,
[Fig. 2] La figure 2 représente schématiquement une vue de dessus d'un ensemble propulsif selon le premier mode de réalisation,
[Fig. 3] La figure 3 représente un premier exemple modifié de l'ensemble propulsif de la figure 2,
[Fig. 4A-4B] Les figures 4A et 4B représentent respectivement deux alternatives d'un deuxième exemple modifié de l'ensemble propulsif de la figure 2,
[Fig. 5] La figure 5 représente un troisième exemple modifié de l'ensemble propulsif de la figure 2,
[Fig. 6A-6B] Les figures 6A et 6B représentent un quatrième exemple modifié de l'ensemble propulsif de la figure 2, respectivement dans une vue de face et dans un vue latérale,
[Fig. 7A-7C] Les figures 7A à 7C représentent schématiquement des vues en perspectives de différentes alternatives dans lesquelles l'ensemble propulsif selon le premier mode de réalisation comprend plus de deux moteurs électriques,
[Fig. 8] La figure 8 représente schématiquement une vue détaillée de dessus de l'alternative de la figure 7B,
[Fig. 9] La figure 9 est une vue schématique en perspective d'un aéronef, et d'une portion de ce dernier, selon un exemple qui n'entre pas dans le cadre des revendications,
[Fig. 10] La figure 10 est une vue schématique en perspective d'un aéronef, et d'une portion de ce dernier, selon un exemple qui n'entre pas dans le cadre des revendications,

### Description des modes de réalisation

Dans la suite de l'exposé, une « vue de dessus » désigne une vue selon une direction perpendiculaire à la fois à l'axe moteur X et à l'axe d'hélice A, une « vue de face » désigne une vue selon une direction parallèle à l'axe d'hélice A, et une « vue latérale » désigne une vue selon une direction parallèle à l'axe moteur X.

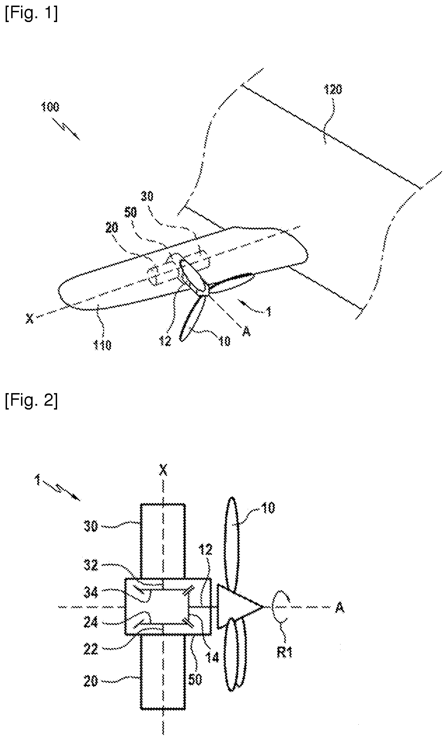

Un premier mode de réalisation de l'invention va être décrit en référence aux figures 1 à 8. Selon ce mode de réalisation, un ensemble propulsif 1 s'applique à une voilure conventionnelle, notamment à une aile 110 d'un aéronef 100, fixée au fuselage 120 de l'aéronef 100.

La voilure 110 s'étend selon une direction principale, depuis son emplanture fixée au fuselage 120, jusqu'à son extrémité opposée à l'emplanture. L'ensemble propulsif 1 comprend deux moteurs électriques 20, 30, disposés dans la voilure 110. Les rotors de ces moteurs (non représentés) tournent chacun autour de l'axe moteur X, parallèle à l'axe principal de la voilure 110. Le rotor du moteur électrique 20 comprend un arbre moteur 22 (non visible sur la figure 1), s'étendant parallèlement à l'axe moteur X, et le rotor du moteur électrique 30 comprend un arbre moteur 32 (non visible sur la figure 1), s'étendant également parallèlement à l'axe moteur X. Les axes de rotation des moteurs électriques 20 et 30 sont de préférence confondus l'un avec l'autre, et coaxiaux avec l'axe moteur X.

L'ensemble propulsif 1 comprend en outre une hélice 10 mobile en rotation autour d'un axe d'hélice A. L'hélice 10 est portée par un arbre d'hélice 12, couplé mécaniquement au moteur électrique 20, et au moteur électrique 30, de telle sorte que la rotation du rotor des moteurs 20, 30 entraine conjointement la rotation de l'hélice 10.

Selon le présent exposé, l'axe d'hélice A est disposé perpendiculairement à l'axe moteur X. Pour ce faire, le couplage mécanique entre l'arbre d'hélice 12 et les moteurs 20 et 30 comprend des pignons coniques. Plus précisément, l'arbre moteur 22 porte à son extrémité un pignon conique de moteur 24, mobile en rotation autour de l'axe moteur X. De même, l'arbre moteur 32 porte à son extrémité un pignon conique de moteur 34, mobile en rotation autour de l'axe moteur X. Dans l'exemple illustré sur la figure 2, les moteurs électriques 20 et 30 forment une paire de moteurs électriques coaxiaux, disposés de telle sorte que les pignons coniques de moteur 24 et 34 soient en vis-à-vis l'un de l'autre, selon l'axe moteur X.

Par ailleurs, l'arbre d'hélice 12 porte également un pignon conique d'hélice 14, mobile en rotation autour de l'axe d'hélice A. Le pignon conique d'hélice 14 est disposé le long de l'arbre d'hélice 12, de manière à engrener à la fois avec le pignon conique de moteur 24 et avec le pignon conique de moteur 34. Les pignons coniques 14, 24 et 34, et les liaisons entre le pignon conique d'hélice 14 et les pignons coniques de moteur 32, 34 sont représentées schématiquement sur les figures 2 à 8. Compte tenu de cette architecture dans laquelle l'axe d'hélice A est perpendiculaire à l'axe moteur X, les pignons coniques 32, 34 et 14 permettent ainsi de réaliser le renvoi d'angle. De préférence, les extrémités des arbres moteurs et de l'arbre d'hélice, et les pignons coniques, sont disposés à l'intérieur d'un carter 50 protégeant ces derniers et les liaisons mécaniques.

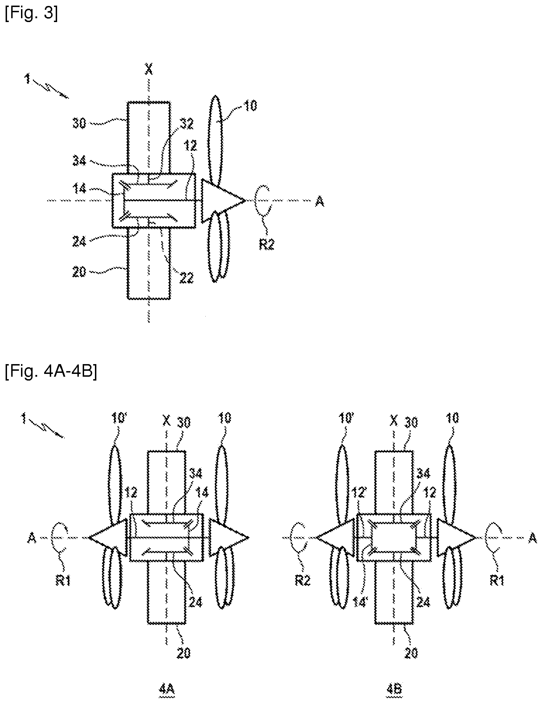

Dans les exemples illustrés sur les figures 2 et 3, un sens amont-aval est défini comme étant le sens dans lequel on se rapproche de l'hélice 10, le long de l'axe d'hélice A. Ainsi, dans l'exemple illustré sur la figure 2, le pignon conique d'hélice 14 engrène avec un côté aval des pignons coniques 32, 34, c'est-à-dire le côté des pignons coniques 32, 34 le plus proche de l'hélice 10. Dans cette configuration, l'hélice 10 tourne dans un premier sens de rotation R1.

A l'inverse, dans l'exemple illustré sur la figure 3, le pignon conique d'hélice 14 engrène avec un côté amont des pignons coniques 32, 34, c'est-à-dire le côté des pignons coniques 32, 34 le plus éloigné de l'hélice 10. Pour ce faire, le pignon conique d'hélice 14 est disposé plus en amont le long de l'axe d'hélice A, et est orienté dans la direction opposée du pignon conique d'hélice 14 illustré sur la figure 2. Dans cette configuration, l'hélice 10 tourne dans un deuxième sens de rotation R2, opposé au premier sens de rotation R1. Cette possibilité de moduler le sens de rotation de l'hélice 10, en déplaçant simplement le pignon conique d'hélice 14, est rendue possible par l'architecture de cet ensemble propulsif, dans laquelle l'axe d'hélice A est perpendiculaire à l'axe moteur X.

Les figures 4A et 4B représentent des exemples modifiés de l'ensemble propulsif représenté sur la figure 2, dans lequel l'ensemble propulsif 1 comprend deux hélices 10, 10'. Sur la figure 4A, l'ensemble propulsif 1 comprend un unique arbre d'hélice 12, et un unique pignon conique d'hélice 14. Une première hélice 10 est disposée à l'extrémité aval de l'arbre d'hélice 12, et une deuxième hélice 10' est disposée à l'extrémité amont de l'arbre d'hélice 12, le sens amont-aval correspondant au sens gauche-droite sur la figure 4A. Selon cet exemple, les deux hélices 10, 10' sont co-rotatives, et tournent toutes les deux dans le premier sens de rotation R1. Sur l'exemple de la figure 4A, le pignon conique d'hélice 14 engrène avec un côté aval des pignons coniques de moteur 24, 34. Cependant, le pignon conique d'hélice 14 pourrait également engrener avec un côté amont des pignons coniques de moteur 24, 34, de manière à ce que les deux hélices 10, 10' tournent toutes les deux dans le deuxième sens de rotation R2.

Sur l'exemple de la figure 4B, l'ensemble propulsif 1 comprend deux arbres d'hélice 12 et 12', et deux pignons coniques d'hélice 14 et 14'. Plus précisément, le premier arbre d'hélice 12 porte à son extrémité amont, un premier pignon conique d'hélice 14, et porte à son extrémité aval la première hélice 10. Par ailleurs, le deuxième arbre d'hélice 12' porte à son extrémité aval, un deuxième pignon conique d'hélice 14', et porte à son extrémité amont la deuxième hélice 10'. Selon cette configuration, le premier pignon conique d'hélice 14 engrène avec un côté aval des pignons coniques de moteur 24, 34, et le deuxième pignon conique d'hélice 14' engrène avec un côté amont des pignons coniques de moteur 24, 34. Par conséquent, selon cet exemple, les deux hélices 10, 10' sont contra-rotatives, et tournent toutes les deux dans des sens de rotation R1 et R2 opposés l'un à l'autre.

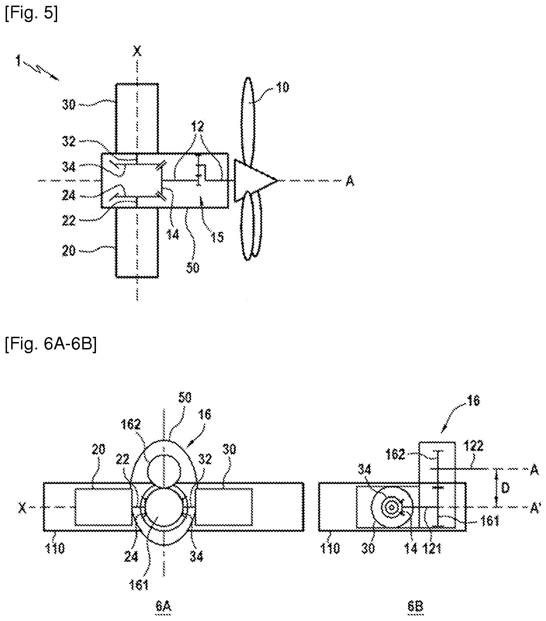

La figure 5 représente un exemple modifié de l'ensemble propulsif représenté sur la figure 2, dans lequel l'ensemble propulsif 1 comprend un réducteur mécanique 15 disposé dans le carter 50, sur l'arbre d'hélice 12, entre l'extrémité amont et l'extrémité aval de celui-ci. Autrement dit, le réducteur mécanique 15 est disposé entre le pignon conique d'hélice 14 et l'hélice 10. Dans cet exemple, le réducteur mécanique 15 prend la forme d'un train épicycloïdal comprenant plusieurs roues présentant des diamètres différents, de manière à réduire la vitesse de rotation de l'hélice 10 par rapport à la vitesse de rotation du pignon conique d'hélice 14, et donc des moteurs électriques 20, 30. Selon cette configuration, l'arbre d'hélice 12 comprend deux portions, l'une s'étendant entre le pignon conique d'hélice 14 et le réducteur mécanique 15, et l'autre s'étendant entre le réducteur mécanique 15 et l'hélice 10. Ces deux portions s'étendent toutes les deux selon l'axe d'hélice A, et sont donc coaxiales.

Les figure 6A et 6B représentent un exemple modifié de l'ensemble propulsif dans une vue de face (figure 6A) et dans une vue latérale (figure 6B). Dans cet exemple modifié, l'axe d'hélice A est toujours perpendiculaire à l'axe moteur X, mais est disposé dans un plan différent du plan dans lequel se trouve l'axe moteur X, c'est-à-dire le plan comprenant la voilure 110.

Dans cette configuration, l'arbre d'hélice 12 comprend une première portion 121 couplée mécaniquement à l'arbre moteur 22, 32 des moteurs électriques 20, 30, par l'intermédiaire des pignons coniques de moteur 24, 34. L'arbre d'hélice 12 comprend en outre une deuxième portion 122 portant l'hélice 10 (non représentée sur les figures 6A et 6B). Les première et deuxième portions 121, 122 sont décalées radialement l'une par rapport à l'autre, dans une direction perpendiculaire à l'axe d'hélice A et à l'axe moteur X.

Par ailleurs, les première et deuxième portions 121, 122 s'engrènent l'une avec l'autre par l'intermédiaire d'un train d'engrenages droits 16. Le train d'engrenages droits 16 comprend une première roue 161 portée par la première portion 121, à l'extrémité aval de cette dernière, et une deuxième roue 162, portée par la deuxième portion 122 à l'extrémité amont de cette dernière, et s'engrenant avec la première roue 161.

Selon cette configuration, la première portion 121 de l'arbre d'hélice 12 s'étend le long d'un premier axe A', perpendiculaire à l'axe moteur X et disposé dans le même plan que celui-ci. Par ailleurs, la deuxième portion 122 de l'arbre d'hélice 12 s'étend le long d'un deuxième axe A, correspondant à l'axe d'hélice perpendiculaire à l'axe moteur X et disposé dans un plan différent de celui-ci, en étant décalé d'une distance D par rapport au premier axe A'.

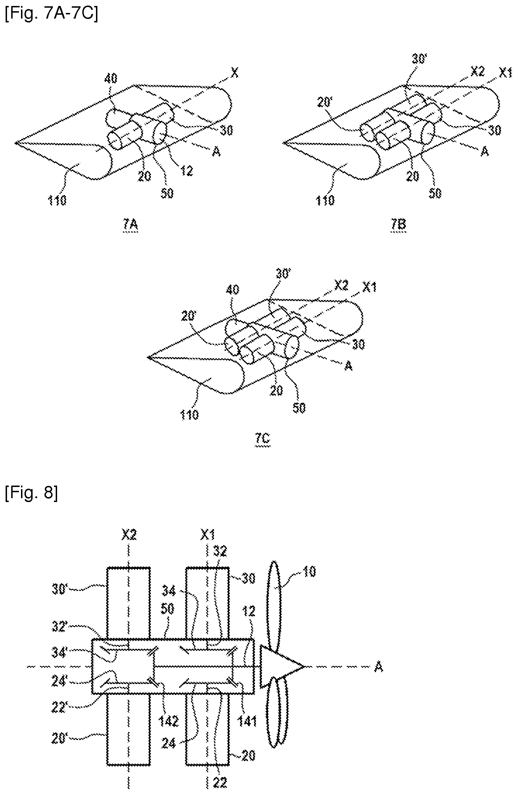

Les figures 7A-7C représentent des exemples modifiés, dans lesquels l'ensemble propulsif 1 comprend plus de deux moteurs électriques. Quelle que soit la configuration, l'ensemble propulsif comprend au moins une paire de moteurs électriques, chacun des deux moteurs de la paire de moteurs électriques étant disposé de part et d'autre de l'arbre d'hélice 12.

Sur l'exemple de la figure 7A, l'ensemble propulsif 1 comprend une paire de moteurs électriques comprenant deux moteurs électriques 20, 30 disposés de part et d'autre de l'arbre d'hélice 12, c'est-à-dire en vis-à-vis l'un de l'autre de chaque côté de l'arbre d'hélice 12, de manière à ce que l'axe de rotation de chacun de ces moteurs s'étende selon l'axe moteur X, perpendiculaire à l'axe d'hélice A.

Sur les exemples des figures 7B et 7C, l'ensemble propulsif 1 comprend deux paires de moteurs électriques comprenant chacune deux moteurs électriques. Une première paire de moteurs comprend deux moteurs électriques 20, 30 d'axes de rotation coaxiaux, s'étendant selon un premier axe moteur X1 perpendiculaire à l'axe d'hélice A. Une deuxième paire de moteurs comprend deux moteurs électriques 20', 30' d'axes de rotation coaxiaux, s'étendant selon un deuxième axe moteur X2 perpendiculaire à l'axe d'hélice A, et parallèle au premier axe moteur X1. Le deuxième axe moteur X2 est en retrait par rapport au premier axe moteur X1 vers l'amont (par rapport à l'hélice, non représentée sur les figures 7A à 7C). Dans cet exemple l'axe d'hélice A, le premier axe moteur X1 et le deuxième axe moteur X2 s'étendent tous dans un même plan, comprenant également la voilure 110.

Les exemples présentés ne sont pas limitatifs, un nombre supérieur de paires de moteurs électriques pouvant être envisagé, par exemple trois, quatre ou davantage.

L'ensemble propulsif 1 peut également comprendre un nombre impair de moteurs électriques. Les figures 7A et 7C illustrent des exemples dans lesquels l'ensemble propulsif 1 comprend respectivement trois et cinq moteurs électriques. Dans cette configuration, en plus de la ou des paire(s) de moteurs électriques disposés de part et d'autre de l'arbre d'hélice 12, un moteur électrique supplémentaire 40 est disposé à l'extrémité de l'arbre d'hélice 12, opposée à l'extrémité portant l'hélice (non représentée sur les figure 7A-7C), nécessairement unique dans ce cas de figure. En particulier, l'axe de rotation de ce moteur électrique supplémentaire 40, plus précisément l'axe de rotation du rotor de ce moteur, est parallèle à l'axe d'hélice A, contrairement aux moteurs électriques de la ou des paire(s) de moteurs électriques, et est couplé directement à l'arbre d'hélice 12.

La figure 8 est une vue détaillée de l'ensemble propulsif 1 selon l'exemple de la figure 7B, selon lequel il comprend quatre moteurs électriques, soit deux paires de moteurs électriques. Dans ce cas de figure, l'arbre d'hélice 12 porte un premier pignon conique d'hélice 141, engrenant avec les pignons coniques de moteur 24, 34 des moteurs électriques 20, 30 de la première paire de moteurs électriques. En outre, l'arbre d'hélice 12 porte un deuxième pignon conique d'hélice 142, disposé plus en amont le long de l'arbre d'hélice 12 que le premier pignon conique d'hélice 141, par rapport à l'hélice 10, de manière à engrener avec les pignons coniques de moteur 24', 34' des moteurs électriques 20', 30' de la deuxième paire de moteurs électriques. On notera que le pignon conique 24' est porté par l'arbre moteur 22' du moteur électrique 20', et le pignon conique 34' est porté par l'arbre moteur 32' du moteur électrique 30', les arbres moteurs 22' et 32' étant tous deux coaxiaux avec le deuxième axe moteur X2.

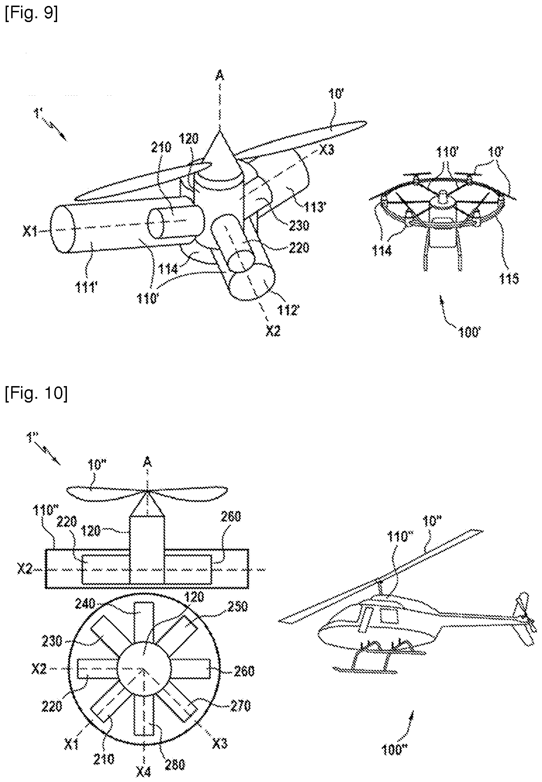

En référence à la figure 9, un ensemble propulsif 1' s'applique à un aéronef 100' du type drone, présentant une voilure 110' non conventionnelle, comprenant une structure en treillis.

Selon cette structure en treillis, la voilure 110' comprend un bras principal annulaire 115, et une pluralité de bras interconnectés à l'intérieur de ce bras annulaire, comme illustré sur la partie droite de la figure 9. Ces différents bras sont connectés au bras principal annulaire 115 de manière à former des noeuds de connexion 114, chaque noeud de connexion 114 correspondant à la jonction de trois portions de bras. La voilure 110', comprenant les différents bras et noeuds de connexion, s'étend dans un plan horizontal, lorsque l'aéronef est posé au sol. Une hélice 10' est disposée à chacun de ces noeuds de connexion 114, de telle sorte que l'axe d'hélice A s'étende verticalement, lorsque l'aéronef est posé au sol.

La partie gauche de la figure 9 représente une vue détaillée d'une jonction entre trois portions de bras de la voilure 110', au niveau de l'un des noeuds de connexion 114. L'hélice 10' est portée par un bras d'hélice 120, représenté schématiquement sur la figure 9. En outre, un moteur électrique est disposé dans chacun des bras de la voilure 110', au niveau du noeud de connexion 114, de manière à être couplé avec le bras d'hélice 120. Plus précisément, un premier bras 111' de la voilure 110' comprend un premier moteur électrique 210, dont l'axe de rotation est un premier axe moteur X1 s'étendant selon l'axe de ce premier bras. Un deuxième bras 112' de la voilure 110' comprend un deuxième moteur électrique 220, dont l'axe de rotation est un deuxième axe moteur X2 s'étendant selon l'axe de ce deuxième bras. Un troisième bras 113' de la voilure 110' comprend un troisième moteur électrique 230, dont l'axe de rotation est un troisième axe moteur X3 s'étendant selon l'axe de ce troisième bras.

Chacun de ces trois moteurs électriques 210, 220, 230 comprend un arbre moteur (non représenté) couplé avec l'arbre d'hélice 120, par l'intermédiaire de pignons coniques (non représentés). Ainsi, chacun des axes moteur X1, X2, X3 est perpendiculaire à l'axe d'hélice A. L'axe principal de la voilure 110' correspond à l'axe le long duquel s'étend chaque bras de la voilure. Les bras présentant une forme cylindrique, l'axe principal de ces bras est donc l'axe de ces cylindres.

En référence à la figure 10, un ensemble propulsif 1" s'applique à un aéronef 100" du type hélicoptère, présentant une voilure 110" non conventionnelle, intégrée dans une paroi supérieure de la cabine d'hélicoptère, comme illustré sur la partie droite de la figure 10. Une hélice 10" est disposée sur cette paroi supérieure.

La partie gauche de la figure 10 représente une vue détaillée schématique de la voilure 110", notamment de la paroi supérieure de la cabine d'hélicoptère, dans une vue latérale et une vue de dessus. Celle-ci comprend une pluralité de moteurs électriques disposés en étoile autour de l'arbre d'hélice 120 portant l'hélice 10", de telle sorte que chacun de ces moteurs électriques soit couplé mécaniquement avec cet arbre 120.

Plus précisément, l'ensemble propulsif 1" comprend huit moteurs électriques 210, 220, 230, 240, 250, 260, 270, 280. Dans cet exemple, les moteurs 210 et 250 sont mobiles autour d'un premier axe moteur X1, les moteurs 220 et 260 sont mobiles autour d'un deuxième axe moteur X2, les moteurs 230 et 270 sont mobiles autour d'un troisième axe moteur X3, et les moteurs 240 et 280 sont mobiles autour d'un quatrième axe moteur X4. Chacun des axes moteurs X1, X2, X3 et X4 est perpendiculaire à l'axe d'hélice A.

Compte tenu de l'architecture d'un hélicoptère, dans laquelle l'axe de rotation de l'hélice est vertical, l'axe principal de la voilure 110" correspond donc à une direction s'étendant dans un plan horizontal, perpendiculaire à l'axe de rotation de l'hélice. Par conséquent, n'importe quelle direction s'étendant dans ce plan horizontal constitue une direction principale de la voilure 110". Ainsi, chacun des moteurs 210 à 280 s'étend dans une direction principale de la voilure 110".

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Aéronef (100, 100', 100") comprenant une voilure (110, 110', 110") s'étendant le long d'un axe principal depuis une emplanture fixée à un fuselage (120) de l'aéronef, jusqu'à une extrémité opposée à l'emplanture, et un ensemble propulsif (1, 1', 1") pour aéronef (100) comprenant :
- au moins deux moteurs électriques (20, 30) disposés dans la voilure (110) de l'aéronef et comprenant chacun un rotor ayant un arbre moteur (22, 32) mobile autour d'un axe moteur (X),
- au moins une hélice (10) portée par un arbre d'hélice (12) mobile autour d'un axe d'hélice (A) et couplé mécaniquement à l'arbre moteur (22, 32) des au moins deux moteurs électriques (20, 30), l'axe d'hélice (A) étant perpendiculaire à l'axe moteur (X) des au moins deux moteurs électriques (20, 30), dans lequel l'arbre moteur (22, 32) de chacun des moteurs électriques (20, 30) porte un pignon conique de moteur (24, 34), et l'arbre d'hélice (12) porte au moins un pignon conique d'hélice (14) s'engrenant avec le pignon conique de moteur (24, 34) porté par l'arbre moteur (22, 32) de chacun des moteurs électriques (20, 30), et dans lequel l'axe moteur (X) des au moins deux moteurs électriques est parallèle à l'axe principal de la voilure.

2. Aéronef (100, 100', 100") selon la revendication 1, dans lequel une partie amincie du pignon conique d'hélice (14) est orientée dans une direction opposée à hélice (10), ou la partie amincie du pignon conique d'hélice (14) est orientée dans la direction de l'hélice (10).

3. Aéronef (100, 100', 100") selon la revendication 1 ou 2, dans lequel les au moins deux moteurs électriques (20, 30) sont disposés de part et d'autre de l'arbre d'hélice (12) de manière à former une première paire de moteurs électriques, l'axe moteur étant un premier axe moteur (X1), l'ensemble propulsif comprenant au moins une deuxième paire de moteurs électriques (20', 30') comprenant chacun un rotor ayant un arbre moteur (22', 32') mobile autour d'un deuxième axe moteur (X2) parallèle au premier axe moteur (X1).

4. Aéronef (100, 100', 100") selon la revendication 3, dans lequel l'arbre d'hélice (12) comprend autant de pignons coniques d'hélice (141, 142) que de paires de moteurs électriques.

5. Aéronef (100, 100', 100") selon l'une quelconque des revendications 1 à 4, comprenant une unique hélice (10) et un moteur électrique supplémentaire (40), l'arbre moteur du rotor du moteur électrique supplémentaire (40) étant parallèle à l'arbre d'hélice (A) et étant couplé à une extrémité de l'arbre d'hélice (12) opposée à l'hélice (10).

6. Aéronef (100, 100', 100") selon l'une quelconque des revendications 1 à 5, dans lequel la au moins une hélice (10) est une première hélice, l'ensemble comprenant une deuxième hélice (10') disposée à une extrémité opposée de l'arbre d'hélice (12) par rapport à la première hélice (10), et orientée dans une direction opposée à la première hélice (10).

7. Aéronef (100, 100', 100") selon la revendication 1 ou 2, dans lequel la au moins une hélice (10) est une première hélice et l'arbre d'hélice (12) est un premier arbre d'hélice, l'ensemble propulsif comprenant une deuxième hélice (10') orientée dans une direction opposée à la première hélice (10) et portée par un deuxième arbre d'hélice (12') distinct du premier arbre d'hélice (12), le deuxième arbre d'hélice (12') étant mobile autour de l'axe d'hélice (A) dans un sens de rotation opposé à la première hélice.

## Patentansprüche

1. Luftfahrzeug (100, 100', 100") umfassend eine Tragfläche (110, 110', 110"), der sich entlang einer Hauptachse von einer Wurzel, die an einem Rumpf (120) des Luftfahrzeugs befestigt ist, bis zu einem gegenüberliegenden Ende der Wurzel erstreckt, und einer Antriebsanordnung (1, 1', 1") für ein Luftfahrzeug (100), umfassend:
- mindestens zwei Elektromotoren (20, 30), die in der Tragfläche (110) des Luftfahrzeugs angeordnet sind und jeweils einen Rotor umfassen, der eine Motorwelle (22, 32) aufweist, die um eine Motorachse (X) beweglich ist,
- mindestens einen Propeller (10), der von einer Propellerwelle (12) getragen wird, die um eine Propellerachse (A) beweglich ist und mechanisch mit der Antriebswelle (22, 32) der mindestens zwei Elektromotoren (20, 30) gekoppelt ist, wobei die Propellerachse (A) senkrecht zu der Motorachse (X) der mindestens zwei Elektromotoren (20, 30) ist, wobei die Motorwelle (22, 32) von jedem der Elektromotoren (20, 30) ein Motorkegelrad (24, 34) trägt, und die Propellerwelle (12) mindestens ein Propellerkegelrad (14) trägt, das mit dem Motorkegelrad (24, 34) eingreift, das von der Motorwelle (22, 32) von jedem der Elektromotoren (20, 30) getragen wird, und wobei die Motorachse (X) der mindestens zwei Elektromotoren parallel zu der Hauptachse der Tragfläche ist.

2. Luftfahrzeug (100, 100', 100") nach Anspruch 1, wobei ein verjüngter Abschnitt des Propellerkegelrads (14) in eine Richtung entgegen dem Propeller (10) ausgerichtet ist, oder der verjüngte Abschnitt des Propellerkegelrads (14) in die Richtung des Propellers (10) ausgerichtet ist.

3. Luftfahrzeug (100, 100', 100") nach Anspruch 1 oder 2, wobei die mindestens zwei Elektromotoren (20, 30) auf beiden Seiten der Propellerwelle (12) angeordnet sind, um ein erstes Elektromotorenpaar zu bilden, wobei die Motorachse eine erste Motorachse (X1) ist,
die Antriebsanordnung umfassend mindestens ein zweites Elektromotorenpaar (20', 30'), jeweils umfassend einen Rotor, der eine Motorwelle (22', 32') aufweist, die um eine zweite Motorachse (X2) parallel zu der ersten Motorachse (X1) beweglich ist.

4. Luftfahrzeug (100, 100', 100") nach Anspruch 3, wobei die Propellerwelle (12) so viele Propellerkegelräder (141, 142) wie Elektromotorenpaare umfasst.

5. Luftfahrzeug (100, 100', 100") nach einem der Ansprüche 1 bis 4, umfassend einen einzelnen Propeller (10) und einen zusätzlichen Elektromotor (40), wobei die Motorwelle des Rotors des zusätzlichen Elektromotors (40) parallel zu der Propellerwelle (A) ist und mit einem Ende der Propellerwelle (12) gegenüber dem Propeller (10) gekoppelt ist.

6. Luftfahrzeug (100, 100', 100") nach einem der Ansprüche 1 bis 5, wobei der mindestens eine Propeller (10) ein erster Propeller ist, die Anordnung umfassend einen zweiten Propeller (10') umfasst, der an einem Ende gegenüber der Propellerwelle (12) in Bezug auf den ersten Propeller (10) angeordnet und in eine Richtung entgegen dem ersten Propeller (10) ausgerichtet ist.

7. Luftfahrzeug (100, 100', 100") nach Anspruch 1 oder 2, wobei der mindestens eine Propeller (10) ein erster Propeller ist und die Propellerwelle (12) eine erste Propellerwelle ist, die Antriebsanordnung umfassend einen zweiten Propeller (10'), der in eine Richtung entgegen dem ersten Propeller (10) ausgerichtet ist und von einer zweiten Propellerwelle (12') getragen wird, die sich von der ersten Propellerwelle (12) unterscheidet, wobei die zweite Propellerwelle (12') in einer Drehrichtung entgegen dem ersten Propeller um die Propellerachse (A) beweglich ist.

## Claims

1. An aircraft (100, 100', 100") comprising a wing (110, 110', 110") extending along a main axis from a root attached to a fuselage (120) of the aircraft, to an opposite end of the root, and a propulsion assembly (1, 1', 1") for an aircraft (100) comprising:
- at least two electric motors (20, 30) disposed in the wing (110) of the aircraft and each comprising a rotor having a motor shaft (22, 32) movable about a motor axis (X),
- at least one propeller (10) borne by a propeller shaft (12) movable about a propeller axis (A) and mechanically coupled to the motor shaft (22, 32) of the at least two electric motors (20, 30), the propeller axis (A) being perpendicular to the motor axis (X) of the at least two electric motors (20, 30), wherein the motor shaft (22, 32) of each of the electric motors (20, 30) bears a motor bevel pinion (24, 34), and the propeller shaft (12) bears at least one propeller bevel pinion (14) meshing with the motor bevel pinion (24, 34) borne by the motor shaft (22, 32) of each of the electric motors (20, 30), and wherein the motor axis (X) of the at least two electric motors is parallel to the main axis of the wing.

2. The aircraft (100, 100', 100") as claimed in claim 1, wherein a tapered part of the propeller bevel pinion (14) is oriented in an opposite direction to the propeller (10), or the tapered part of the propeller bevel pinion (14) is oriented in the direction of the propeller (10).

3. The aircraft (100, 100', 100") as claimed in claim 1 or 2, wherein the at least two electric motors (20, 30) are disposed on either side of the propeller shaft (12) in such a way as to form a first pair of electric motors, the motor axis being a first motor axis (X1), the propulsion assembly comprising at least a second pair of electric motors (20', 30') each comprising a rotor having a motor shaft (22', 32') movable about a second motor axis (X2) parallel to the first motor axis (X1).

4. The aircraft (100, 100', 100") as claimed in claim 3, wherein the propeller shaft (12) comprises as many propeller bevel pinions (141, 142) as there are pairs of electric motors.

5. The aircraft (100, 100', 100") as claimed in any of claims 1 to 4, comprising a single propeller (10) and an additional electric motor (40), the motor shaft of the rotor of the additional electric motor (40) being parallel to the propeller shaft (A) and being coupled to one end of the propeller shaft (12) opposite the propeller (10).

6. The aircraft (100, 100', 100") as claimed in any of claims 1 to 5, wherein the at least one propeller (10) is a first propeller, the assembly comprising a second propeller (10') disposed at an opposite end of the propeller shaft (12) with respect to the first propeller (10), and oriented in an opposite direction to the first propeller (10).

7. The aircraft (100, 100', 100") as claimed in claim 1 or 2, wherein the at least one propeller (10) is a first propeller and the propeller shaft (12) is a first propeller shaft, the propulsion assembly comprising a second propeller (10') oriented in an opposite direction to the first propeller (10) and borne by a second propeller shaft (12') separate from the first propeller shaft (12), the second propeller shaft (12') being movable about the propeller axis (A) in an opposite direction of rotation to the first propeller.
